# FASCICULE DE BREVET EUROPEEN

(11) **EP 3 501 842 B1**
(45) Date de publication et mention de la délivrance du brevet: **30.09.2020**
(21) Numéro de dépôt: 17210337.6
(22) Date de dépôt: 22.12.2017
(51) Int. Cl.: B43K 29/087

(54) **DISPOSITIF D'AFFICHAGE À ROULEAUX**
ANZEIGEVORRICHTUNG MIT ROLLEN
DISPLAY DEVICE WITH ROLLERS

(43) Date de publication de la demande: 26.06.2019
(73) Titulaire: Montres Breguet S.A., 1344 L'Abbaye (CH)
(72) Inventeur: DAUBY, Sylvain, 1347 Le Sentier (CH); MARÉCHAL, Sylvain, 39220 Bois-d'Amont (FR)
(74) Mandataire: ICB SA

(56) Documents cités:
- CH-A- 155 514
- GB-A- 2 135 481
- US-A- 3 574 995

## Description

### Domaine de l'invention

La présente invention se rapporte à un dispositif d'affichage d'horlogerie comportant au moins un rouleau pivotant autour d'un axe. L'invention concerne encore un instrument d'écriture comportant au moins un tel dispositif d'affichage.

L'invention concerne le domaine des dispositifs d'affichage d'horlogerie, notamment pour montres et instruments d'écriture.

### Arrière-plan de l'invention

Généralement, les affichages horlogers sont rarement réalisés par rouleaux car les indications sous cette forme présentent une épaisseur relativement élevée, en raison du diamètre du rouleau, comportant par exemple jusqu'à 31 indications pour les jours du mois, 12 ou 24 indication pour les heures, ou encore 60 indications pour les minutes. Une telle réalisation est encore plus difficile dans le cas d'un instrument d'écriture tel qu'un stylo où la place disponible est limitée.

On connait du document WO2014174364 un instrument d'écriture comprenant un corps de préhension tubulaire à l'intérieur duquel il y a un logement pour recevoir une réserve d'encre, une pointe d'écriture à une extrémité du corps tubulaire susceptible d'être reliée à une réserve d'encre disposée dans le logement, et un mécanisme horloger logé dans le corps de préhension tubulaire.

Cependant, un tel mécanisme horloger reste encombrant dans l'instrument d'écriture à cause de sa conception étagée. Cette conception présente plusieurs inconvénients, d'une part cela limite la surface d'affichage disponible et d'autre part, cela réduit la réserve d'encre disponible car le mécanisme s'étend en hauteur.

On connaît également du document GB 2 135 481 un tel dispositif d'affichage.

### Résumé de l'invention

L'invention a notamment pour objectif de pallier les différents inconvénients de ces techniques connues.

Plus précisément, un objectif de l'invention est de fournir un mécanisme compact et présentant les composants du mouvement dans un même plan.

L'invention a également pour objectif, au moins dans un mode de réalisation particulier, de fournir un dispositif d'affichage proposant une surface d'affichage facilement visible.

Ces objectifs, ainsi que d'autres qui apparaîtront plus clairement par la suite, sont atteints selon l'invention comme définie par la revendication 1 annexée.

Conformément à d'autres variantes avantageuses de l'invention :
- les moyens d'entraînement dudit au moins un rouleau comprennent un anneau denté solidaire dudit au moins un rouleau et pivotant autour de l'axe de rotation ;
- le bâti est solidaire d'un réceptacle agencé pour recevoir ledit mouvement ;
- le bâti comprend au moins un pont à chacune de ses extrémités, dont un premier pont, dit pont supérieur et un deuxième pont, dit pont inférieur ;
- chaque rouleau comprend une bande d'affichage disposée selon une circonférence du rouleau et dans un plan perpendiculaire à l'axe de rotation du rouleau ;
- ledit premier rouleau pivote autour du pont supérieur, et ledit deuxième rouleau pivote autour du pont inférieur, chaque rouleau comprenant des moyens d'entraînement pour faire pivoter lesdits rouleaux autour de l'axe A ;
- un pont intermédiaire fixe est disposé entre le premier rouleau et le deuxième rouleau ;
- le pont intermédiaire présente, sur sa périphérie, un indicateur pour la lecture de l'heure et/ou la date ;
- le premier rouleau indique l'heure et le deuxième rouleau indique le quantième ;
- ladite au moins une base de temps comprend des moyens de transmissions sous la forme d'un rouage, des moyens de distributions de l'énergie tel qu'un échappement, des moyens de régulation tel qu'un balancier spiral ;
- ladite au moins une source d'énergie comprend un barillet.

L'invention concerne également un instrument d'écriture comprenant un dispositif d'affichage conforme à l'invention, le mécanisme étant logé à l'une des extrémités du stylo ou dans le corps de l'instrument d'écriture.

### Description sommaire des dessins

D'autres caractéristiques et avantages de la présente invention ressortiront plus clairement de la description détaillée qui suit d'un exemple de réalisation d'un dispositif de fixation d'un bracelet selon l'invention, cet exemple étant donné à titre purement illustratif et non limitatif seulement, en liaison avec les dessins annexés sur lesquels :
- les figures 1a et 1b illustrent respectivement une vue en perspective et une vue en coupe d'un mécanisme d'affichage conforme à l'invention ;
- les figures 2a et 2b représentent des vues en perspective éclatées d'un mécanisme d'affichage conforme à l'invention ;
- la figure 3 illustre une vue en perspective d'un premier rouleau et de ses moyens d'entrainement d'un mécanisme d'affichage conforme à l'invention, et
- la figure 4 illustre une vue en perspective d'un deuxième rouleau et de ses moyens d'entrainement d'un mécanisme d'affichage conforme à l'invention.

### Description détaillée des modes de réalisation préférés

L'invention est illustrée sur les figures, de façon non limitative, avec un dispositif d'affichage horloger comportant deux rouleaux affichant respectivement une information relative à l'heure courante et une information relative à la date.

Dans la description qui suit, le dispositif comprend, à titre illustratif et non limitatif, deux rouleaux. L'homme du métier pourrait adapter l'invention à un seul rouleau ou plus de deux rouleaux sans difficulté particulière.

Ainsi, l'invention concerne un dispositif d'affichage 1 d'au moins une grandeur liée au temps, cette grandeur peut être l'heure courante par exemple, à savoir les heures et les minutes, on peut également y ajouter les secondes, la date peut aussi être affichée.

Plus précisément, le dispositif d'affichage 1 comprend un mouvement horloger 10 comportant au moins une base de temps et au moins une source d'énergie qui s'étendent dans un même premier plan, et au moins un rouleau 2, 3 monté pivotant autour d'un axe de rotation A et qui s'étend dans un second plan parallèle au premier plan, ledit au moins un rouleau 2, 3 comprenant une bande d'affichage 20, 30 disposée sur une périphérie extérieure et sur laquelle au moins un indication de la grandeur liée au temps est reportée, le mouvement horloger 100 entraînant en rotation ledit au moins un rouleau 2,3 autour de l'axe A via des moyens d'entraînement 4, 5 qui s'étendent dans le même second plan que ledit au moins un rouleau 2, 3, ledit au moins un rouleau 2, 3 et le mouvement horloger 100 étant centrés sur l'axe A..

De manière classique, le mouvement horloger comprend un organe moteur tel qu'un barillet, des moyens de transmissions sous la forme d'un rouage, des moyens de distributions de l'énergie tel qu'un échappement, des moyens de régulation tel qu'un balancier spiral et des moyens d'affichage. Le mouvement peut également comprendre des moyens de remontage manuel ou automatique.

Selon l'invention, les composants cités ci-dessus constituant le mouvement 100 sont montés selon un même plan, et sur un même pont qui agencé pour porter les composants.

Les figures illustrent de façon non limitative, un dispositif 1 comprenant un premier rouleau 2 et un deuxième rouleau 3, chaque rouleau comprenant une bande d'affichage 20,30 disposée selon une circonférence du rouleau et dans un plan perpendiculaire à l'axe de rotation du rouleau.

Avantageusement, les rouleaux 2 et 3 sont concentriques au mouvement 100, c'est-à-dire qu'ils que l'axe de rotation A passe en leur centre respectif, et la bande d'affichage des rouleaux 2, 3 est perpendiculaire au plan formé par le mouvement 100. La bande d'affichage 20 du premier rouleau est agencée pour recevoir des indications de l'heure courante et la bande d'affichage 30 du deuxième rouleau est agencée pour recevoir des indications du quantième, les informations pouvant se présenter sous la forme de chiffres romains ou arabes par exemple.

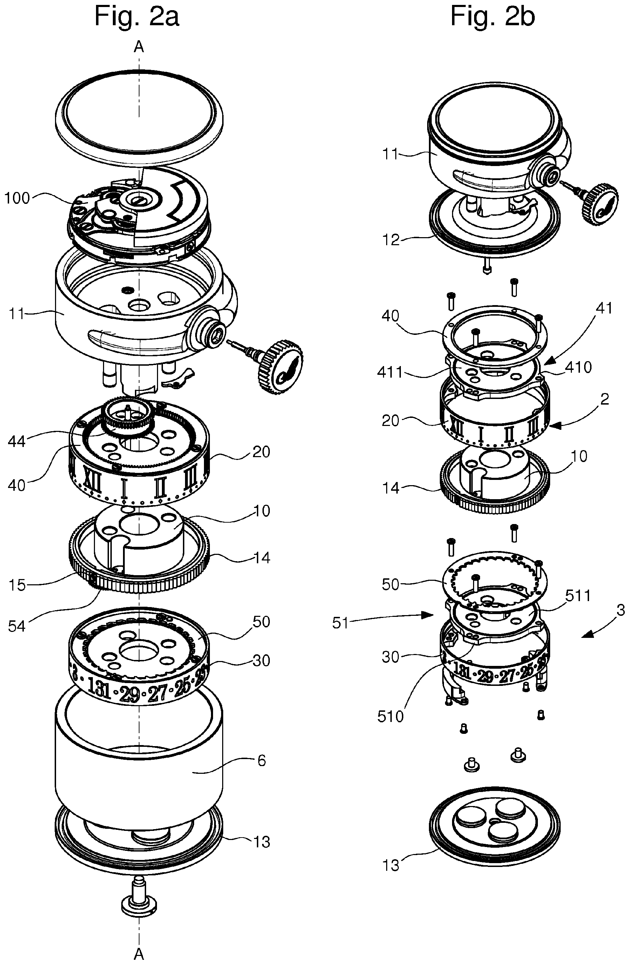

Comme on peut l'observer sur les figures 2a et 2b, le rouleau 2, 3 est formé par un élément support 41, 51, une bande d'affichage 20, 30 disposée selon une circonférence du rouleau 2, 3 et à la périphérie extérieure dudit au moins un rouleau 2, 3, et comprend des moyens d'entrainement 4, 5.

Avantageusement, chaque élément support 41, 51 comprend un partie périphérique mobile 410, 510 solidaire du rouleau et une partie centrale fixe 411, 511, un roulement à billes ou à rouleaux pouvant être disposé entre la partie mobile et la partie fixe pour limiter les frictions et faciliter le déplacement du rouleau 2, 3.

Tel que représenté sur les figures, le dispositif comprend un bâti 10 autour duquel tournent les premier et deuxième rouleaux 2 et 3. Tel qu'illustré, le bâti 10 est surmonté d'un boîtier 11 de forme cylindrique et est agencé pour recevoir le mouvement 100, le boîtier 11 étant solidaire du bâti et comprenant un trou traversant pour la transmission du mouvement vers le rouleau 2, 3.

Comme on peut l'observer sur les figures, le bâti 10 comprend au moins un pont à chacune de ses extrémités, à savoir un premier pont, dit pont supérieur 12 et un deuxième pont, dit pont inférieur 13, les ponts supérieur 12 et inférieur 13 étant également centrés autour de l'axe de rotation A. Selon un aspect particulier de l'invention, le pont supérieur 12 forme un élément monobloc avec le boîtier 11, le pont supérieur 12 étant usiné directement à la base du boitier 11. Bien évidemment, l'homme du métier pourrait également envisager deux éléments distincts assemblés entre eux par la suite, le fait d'usiner directement le pont supérieur 12 dans le boitier permet entre autre des économies de matière et un assemblage plus aisé et plus rapide.

Ainsi, le premier rouleau 2 pivote autour du pont supérieur 12, et le deuxième rouleau 3 pivote autour du pont inférieur 13, chaque rouleau 2, 3 comprenant respectivement des premier et deuxième moyens d'entraînement 4, 5 pour pivoter autour de l'axe de rotation A.

De plus, le dispositif comprend un pont intermédiaire 14 qui est monté fixe, disposé entre le premier rouleau 2 et le deuxième rouleau 3, et agencé pour être visible entre les deux rouleaux. Avantageusement, le pont intermédiaire 14 présente, sur sa périphérie, un indicateur 15 pour pouvoir lire l'heure et/ou la date.

Selon un mode de réalisation préférentiel de l'invention, le pont intermédiaire 14 porte le bâti 10.

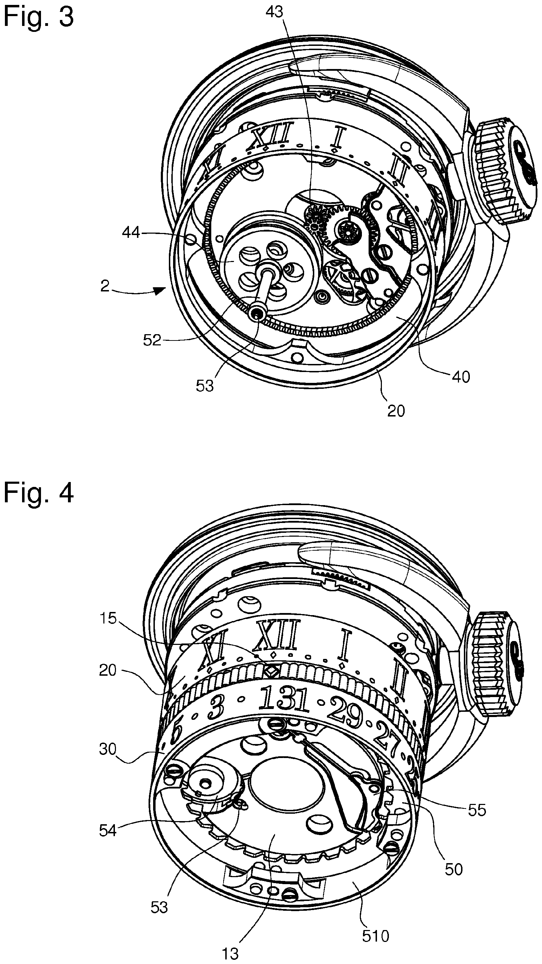

Comme on peut l'observer aux figures 2b et 3, les premiers moyens d'entrainement comprennent un premier anneau denté 40, monté sur l'élément support 41, et plus précisément sur la partie périphérique mobile 410, le premier anneau denté 40 étant ainsi solidaire du premier rouleau 2, coplanaire avec le rouleau 2, et pivotant également autour de l'axe de rotation A.

Les deuxièmes moyens d'entrainement 5 comprennent un deuxième anneau denté 50, monté sur l'élément support 51, et plus précisément sur la partie périphérique mobile 510, le deuxième anneau denté 50 étant ainsi solidaire du deuxième rouleau 3, coplanaire avec le rouleau 3, et pivotant également autour de l'axe de rotation A.

Les anneaux dentés 40, 50 peuvent être respectivement montés de manière amovible sur l'élément support 41, 51 au moyen de vis par exemple, on pourrait également imaginer que l'anneau denté soit fixé à demeure sur l'élément support 41, 51 au moyen d'une soudure par exemple.

Ainsi, le premier anneau denté 40 est entrainé par un arbre 42 en sortie du mouvement 100 débouchant sous le pont supérieur, cet arbre 42 comprenant un pignon 43 agencé pour engrener une roue dentée 44 qui entraine l'anneau denté 40 à raison d'un tour en 12 ou 24 heure dans le cas où le premier rouleau 3 est agencé pour afficher l'heure courante. Une telle cinématique d'engrenage est visible aux figures 3 et 3.

Le deuxième anneau denté 50 est entrainé au moyen d'un arbre 52 solidaire de la roue dentée 44 par l'une de ses extrémités, l'arbre 52 traversant la partie centrale 411 de l'élément support 41 et le pont intermédiaire 14 via un orifice prévu à cet effet, et comprenant un deuxième pignon 53 monté à son extrémité libre. Ce deuxième pignon 53 est ainsi logé dans le pont intermédiaire 14 et est agencé pour engrener une roue de quantième 54 entraînant le deuxième anneau denté 50.

Comme on peut l'observer à la figure 4, le pont intermédiaire 14 reçoit également un sautoir 55 de quantième, ce sautoir 55 étant débrayable lors de la correction de la date. Dans la configuration décrite, le premier rouleau 2 affiche l'heure et le deuxième rouleau 3 affiche le quantième, l'homme du métier pourrait facilement envisager d'autres types affichages sans difficulté particulière.

Tel qu'illustré, le pont inférieur 13 est surmonté successivement par le deuxième rouleau 3, le pont intermédiaire 14, le premier rouleau 2 et le boîtier 11, le bâti 10 servant d'élément de support central pour ces éléments, le pont inférieur 13, le pont intermédiaire 14, le boitier 11 et les parties centrales fixes 411, 511 y étant fixée de manière amovible.

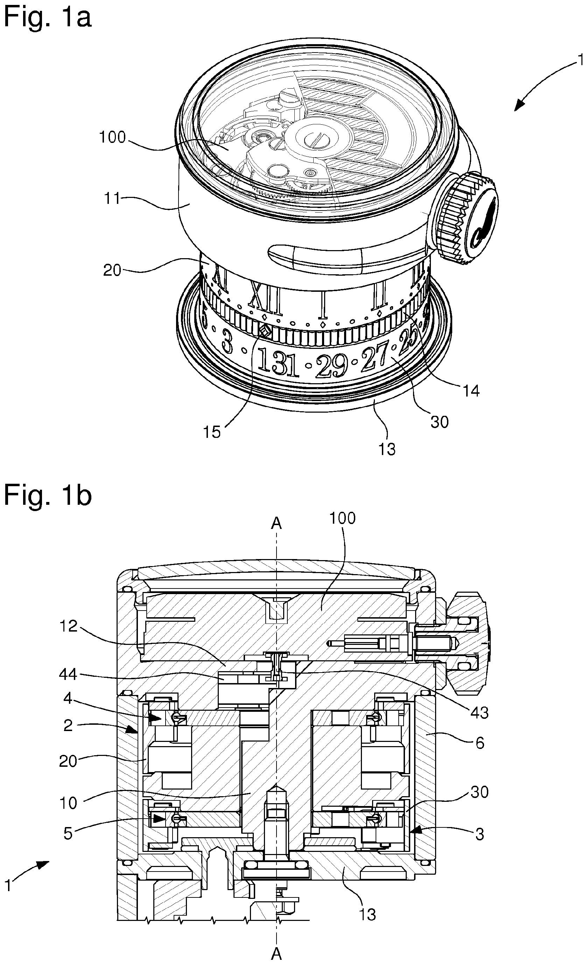

Selon le mode de réalisation préférentiel illustré à la figure 1, le dispositif comprend une glace 6 disposée à sa périphérie, la glace 6 se présentant sous la forme d'un cylindre transparent et se logeant à chacune de extrémités supérieure et inférieure dans une rainure formée dans les ponts inférieur 13 et supérieur 12. Avantageusement, les ponts inférieur 13 et supérieur 12 présentent un diamètre légèrement plus élevé que le premier rouleau 2, le deuxième rouleau 3 et le pont intermédiaire 14 de façon que la glace 6 puisse être placée sans problème.

Pour fixer l'ensemble, le bâti 10 est fixé au boîtier 11 d'une part, et à la partie centrale fixe d'autre part 511, par ses extrémités inférieure et supérieure au moyen de vis. Le pont inférieur 13 est quant à lui fixé à la partie centrale fixe d'autre part 511 une fois la glace 6 mis en place.

Les différentes variantes de l'invention permettent de réaliser des affichages à rouleaux de toutes sortes d'indications dans le volume réduit d'un instrument d'écriture ou d'une montre de dimension normale.

## Revendications

1. Dispositif d'affichage (1) d'au moins une grandeur liée au temps, le dispositif d'affichage comprenant un mouvement horloger (100) comportant au moins une base de temps et au moins une source d'énergie qui s'étendent dans un même premier plan, et au moins un rouleau (2, 3) monté pivotant autour d'un axe de rotation (A) et qui s'étend dans un second plan parallèle au premier plan, ledit au moins un rouleau (2, 3) comprenant une bande d'affichage (20, 30) disposée sur une périphérie extérieure et sur laquelle au moins une indication de la grandeur liée au temps est reportée, le mouvement horloger (100) entrainant en rotation ledit au moins un rouleau (2,3) autour dudit axe de rotation (A) via des moyens d'entraînement (4, 5) qui s'étendent dans le même second plan que ledit au moins un rouleau (2, 3), ledit au moins un rouleau (2, 3) et le mouvement horloger (100) étant centrés sur ledit axe de rotation (A), **caractérisé en ce qu'**il comprend un bâti (10) autour duquel tournent un premier (2) et un deuxième (3) dit rouleau, ledit bâti (10) étant surmonté d'un boîtier (11) agencé pour recevoir ledit mouvement (100), ledit boîtier (11) étant solidaire dudit bâti.

2. Dispositif d'affichage (1) selon la revendication 1, dans lequel les moyens d'entrainement (4, 5) dudit au moins un rouleau (2, 3) comprennent un anneau denté (40, 50) solidaire dudit au moins un rouleau (2, 3) et pivotant autour de l'axe de rotation (A).

3. Dispositif d'affichage (1) selon la revendication 1 ou 2, dans lequel le bâti (10) comprend au moins un pont à chacune de ses extrémités, dont un premier pont, dit pont supérieur (12) et un deuxième pont, dit pont inférieur (13).

4. Dispositif d'affichage (1) selon l'une des revendications 1 à 3, chaque rouleau comprenant une bande d'affichage (20, 30) disposée selon une circonférence du rouleau et dans un plan perpendiculaire à l'axe de rotation (A) du rouleau.

5. Dispositif d'affichage (1) selon les revendications 3 et 4 quand cette dernière dépend de la revendication 3 dans lequel ledit premier rouleau (2) pivote autour du pont supérieur (12), et ledit deuxième rouleau (3) pivote autour du pont inférieur (13) chaque rouleau comprenant lesdits moyens d'entraînement (4, 5) pour faire pivoter lesdits rouleaux (2, 3) autour de l'axe de rotation (A).

6. Dispositif d'affichage (1) selon la revendication 3, ou la revendication 4 quand elle dépend de la revendication 3, ou la revendication 5, dans lequel un pont intermédiaire (14) fixe est disposé entre le premier rouleau (2) et le deuxième rouleau (3).

7. Dispositif d'affichage (1) selon la revendication 6, dans lequel le pont intermédiaire (14) présente, sur sa périphérie, un indicateur (15) pour la lecture de l'heure et/ou la date.

8. Dispositif d'affichage (1) selon l'une des revendications 1 à 7, dans lequel le premier rouleau (2) affiche l'heure et le deuxième rouleau (3) affiche le quantième.

9. Dispositif d'affichage (1) selon l'une des revendications 1 à 8, dans lequel ladite au moins une base de temps comprend des moyens de transmissions sous la forme d'un rouage, des moyens de distributions de l'énergie tel qu'un échappement, des moyens de régulation tel qu'un balancier spiral.

10. Dispositif d'affichage (1) selon l'une des revendications 1 à 9, dans lequel ladite au moins une source d'énergie comprend un barillet.

11. Instrument d'écriture comprenant un dispositif d'affichage (1) selon l'une des revendications précédentes, ledit dispositif d'affichage (1) étant monté à l'une des extrémités de l'instrument d'écriture ou dans le corps de l'instrument d'écriture.

## Patentansprüche

1. Vorrichtung (1) zum Anzeigen mindestens einer zeitbezogenen Größe, wobei die Anzeigevorrichtung ein Uhrwerk (100) mit mindestens einer Zeitbasis und mindestens einer Energiequelle, die sich in einer ersten Ebene erstrecken, und mindestens einer Rolle (2, 3), die um eine Drehachse (A) schwenkbar montiert ist und sich in einer zu der ersten Ebene parallelen zweiten Ebene erstreckt, umfasst, wobei die mindestens eine Rolle (2, 3) ein Anzeigeband (20, 30) aufweist, das an einem äußeren Umfang angeordnet ist und auf dem mindestens eine Anzeige der zeitbezogenen Größe angegeben wird, wobei das Uhrwerk (100) die mindestens eine Rolle (2, 3) um die Drehachse (A) über Antriebsmittel (4, 5), die sich in derselben zweiten Ebene wie die mindestens eine Rolle (2, 3) erstrecken, rotatorisch antreibt, wobei die mindestens eine Rolle (2, 3) und das Uhrwerk (100) auf die Drehachse (A) zentriert sind, **dadurch gekennzeichnet, dass** ein Rahmen (10) vorgesehen ist, um den sich eine erste (2) und eine zweite (3) Rolle drehen, wobei der Rahmen (10) obenauf mit einem Gehäuse (11) bekrönt ist, das dazu vorgesehen ist, das Werk (100) aufzunehmen, wobei das Gehäuse (11) mit dem Rahmen fest verbunden ist.

2. Anzeigevorrichtung (1) nach Anspruch 1, wobei die Antriebsmittel (4, 5) der mindestens einen Rolle (2, 3) einen gezahnten Ring (40, 50) aufweisen, der mit der mindestens einen Rolle (2, 3) fest verbunden ist und um die Drehachse (A) schwenkbar ist.

3. Anzeigevorrichtung (1) nach Anspruch 1 oder 2, wobei der Rahmen (10) an jedem seiner Enden mindestens eine Brücke aufweist, nämlich eine erste Brücke, genannt obere Brücke (12), und eine zweite Brücke, genannt untere Brücke (13).

4. Anzeigevorrichtung (1) nach einem der Ansprüche 1 bis 3, wobei jede Rolle ein Anzeigeband (20, 30) aufweist, das entlang eines Umfangs der Rolle und in einer Ebene senkrecht zu der Drehachse (A) der Rolle angeordnet ist.

5. Anzeigevorrichtung (1) nach den Ansprüchen 3 und 4, wenn Letzterer von Anspruch 3 abhängt, wobei die erste Rolle (2) um die obere Brücke (12) schwenkt und die zweite Rolle (3) um die untere Brücke (13) schwenkt, wobei jede Rolle die Antriebsmittel (4, 5) aufweist, um die Rollen (2, 3) um die Drehachse (A) zu schwenken.

6. Anzeigevorrichtung (1) nach Anspruch 3 oder nach Anspruch 4, wenn er von Anspruch 3 abhängt, oder nach Anspruch 5, wobei zwischen der ersten Rolle (2) und der zweiten Rolle (3) eine feste Zwischenbrücke (14) angeordnet ist.

7. Anzeigevorrichtung (1) nach Anspruch 6, wobei die Zwischenbrücke (14) an ihrem Umfang einen Anzeiger (15) zum Ablesen der Zeit und/oder des Datums aufweist.

8. Anzeigevorrichtung (1) nach einem der Ansprüche 1 bis 7, wobei die erste Rolle (2) die Zeit anzeigt und die zweite Rolle (3) das Datum anzeigt.

9. Anzeigevorrichtung (1) nach einem der Ansprüche 1 bis 8, wobei die mindestens eine Zeitbasis Übertragungsmittel in Form eines Räderwerks, Mittel zum Verteilen der Energie wie etwa eine Hemmung und Regulierungsmittel wie etwa eine Unruh-Spiralfeder umfasst.

10. Anzeigevorrichtung (1) nach einem der Ansprüche 1 bis 9, wobei die mindestens eine Energiequelle ein Federhaus umfasst.

11. Schreibgerät, umfassend mindestens eine Anzeigevorrichtung (1) nach einem der vorhergehenden Ansprüche, wobei die Anzeigevorrichtung (1) an einem der Enden des Schreibgeräts oder im Körper des Schreibgeräts montiert ist.

## Claims

1. Device (1) for displaying at least one time-related magnitude comprising a timepiece movement (100) including at least one time base and at least one energy source which extend in a first same plane, and at least one roller (2, 3) pivotably mounted about an axis of rotation (A) and which extends in a second plane parallel to the first plane, said at least one roller (2, 3) comprising a display strip (20, 30) arranged on an outer periphery and on which at least one indication of the time-related magnitude is inscribed, the timepiece movement (100) driving in rotation said at least one roller (2, 3) about said axis of rotation (A) via drive means (4, 5) which extend in the same second plane as said at least one roller (2, 3), said at least one roller (2, 3) and the timepiece movement (100) being centred on said axis of rotation (A), **characterized in that** it comprises a frame (10) around which rotate a first (2) and a second (3) said roller, the frame (10) being surmounted by a case (11) arranged to receive said movement (100), said case (11) being integral with said frame.

2. Display device (1) according to claim 1, wherein the means (4, 5) for driving said at least one roller (2, 3) include a toothed ring (40, 50) integral with said at least one roller (4, 5) and pivoting about the axis of rotation (A).

3. Display device (1) according to claim 1 or 2, wherein the frame (10) includes at least one bar at each of its ends, consisting of a first bar, called the upper bar (12) and a second bar, called the lower bar (13).

4. Display device (1) according to any of claims 1 to 3, wherein each roller comprises a display strip (20, 30) arranged on a circumference of the roller and in a plane perpendicular to the axis of rotation (A) of the roller.

5. Display device (1) according to claims 3 and 4 when the latter depends on claim 3, wherein said first roller (2) pivots about the upper bar (12), and said second roller pivots about the lower bar (13), each roller comprising said drive means (4, 5) for pivoting said rollers (2, 3) about the axis of rotation (A).

6. Display device (1) according to claim 3, or claim 4 when it depends on claim 3, or claim 5, wherein a fixed intermediate bar (14) is arranged between the first roller (2) and the second roller (3).

7. Display device (1) according to claim 6, wherein the intermediate bar (14) has, on its periphery, an indicator (15) for reading the time and/or the date.

8. Display device (1) according to any of claims 2 to 7, wherein the first roller (2) displays the time and the second roller (3) displays the date.

9. Display device (1) according to any of claims 1 to 8, wherein said at least one time base includes transmission means in the form of a train, energy distribution means such as an escapement, regulating means such as a balance/balance spring.

10. Display device (1) according to any of claims 1 to 9, wherein said at least one energy source comprises a barrel.

11. Writing instrument including a display device (1) according to any of the preceding claims, said display device (1) being mounted at one of the ends of the writing instrument or inside the body of the writing instrument.
